# EUROPÄISCHE PATENTANMELDUNG

(11) **EP 3 680 200 A1**
(43) Veröffentlichungstag der Anmeldung: **15.07.2020**
(21) Anmeldenummer: 20150768.8
(22) Anmeldetag: 08.01.2020
(51) Int. Cl.: B65G 47/69, B65G 17/48

(54) **PUFFERSPEICHERANLAGE FÜR HÄNGEFÖRDERSYSTEME**

(30) Priorität: 09.01.2019 CH 192019
(71) Anmelder: FERAG AG, 8340 Hinwil (CH)
(72) Erfinder: Sigrist, Sergio, 8340 Hinwil (CH)
(74) Vertreter: IPrime Rentsch Kaelin AG

(57) **Zusammenfassung**

Eine Pufferspeichereinrichtung (100) für ein Hängefördersystem (10) mit einzeln förderbaren Transporteinheiten (40) weist einen geschlossenen Förderpfad auf. Dieser umfasst eine Pufferstrecke (117), entlang welcher Transporteinheiten stromabwärts förderbar sind, eine Zuführstrecke (104) zur Zuförderung von Transporteinheiten an einem Zuführungspunkt (102) der Pufferstrecke, eine Wegführstrecke (105) zur Wegförderung von Transporteinheiten an einem Wegführungspunkt (103) der Pufferstrecke, und eine oder mehrere zusätzliche Kurzschlussstrecken (113), welche jeweils einen Startpunkt entlang der Pufferstrecke mit einem Zielpunkt entlang der Pufferstrecke verbinden.

## Beschreibung

### Gebiet der Technik

Die vorliegende Erfindung bezieht sich auf das Gebiet der Transport- und Fördertechnik. Die Erfindung betrifft Pufferspeichereinrichtungen für Hängefördersysteme mit einzeln förderbaren Transporteinheiten, sowie Hängefördersysteme mit solchen Pufferspeichereinrichtungen.

### Technologischer Hintergrund

Dem allgemeinen Kostendruck in der Warenverteilung und Warenversorgung wird in der Logistik, insbesondere der Intralogistik, unter anderem durch eine Steigerung der Effizienz automatisierter Systeme begegnet.

Die in grossen Lagern, insbesondere auch Hochregallagern eingelagerten und vorgehaltenen Waren sollen beispielsweise möglichst effizient ausgespeichert, zu einer Gruppe zusammengestellt (kommissioniert) und an einen vorgesehenen Bestimmungsort gefördert werden. Diese Kommissionierung, d.h. das Zusammenstellen von bestimmten Teilmengen (Artikeln) aus einer bereitgestellten Gesamtmenge (Sortiment) aufgrund von Aufträgen, ist ein wichtiger Teilbereich der Intralogistik. Ein typisches Beispiel für solche Anwendungen sind Versandzentren von Versandhandelsunternehmen, in welchen individuelle Kundenbestellungen aus einem grossen Artikelsortiment zusammengestellt, verpackt und an den Empfänger verschickt werden müssen.

In komplexen Produktionsprozessen wiederum kann es erforderlich sein, die einzelnen Elemente der Produktionsprozesse, beispielsweise Halbfabrikate, aus den entsprechenden Produktionsanlagen oder aus Lagern zu übernehmen, und diese für weitere Produktionsschritte effizient, fehlerfrei und termingerecht am richtigen Zielort bereitzustellen. Dabei sollen in der Regel die vorrätig zu haltenden Mengen an einzelnen Warenelementen, der Personalbedarf und die Grösse der Anlage insbesondere aus wirtschaftlichen Gründen möglichst gering sein. Ebenso sollen Lieferverzögerungen vermieden werden, um kostspielige Unterbrüche oder Störungen in der Gesamtproduktion zu vermeiden. Ein typisches Beispiel für solche Anwendungen sind hochkomplexe Produktionsanlagen in der Automobilindustrie, in welchen mehrere Fahrzeugmodelle in einer Vielzahl von Ausstattungsvarianten stufenweise aus einer sehr grossen Anzahl von Einzelteilen montiert und aufgebaut werden.

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren und Gegenständen erwiesen.

Solche Hängefördersysteme weisen typischerweise Transporteinheiten auf, welche das Transportgut aufnehmen, und welche mit dem Hängefördersystem entlang eines Förderpfades gefördert werden.

Bei Hängefördersystemen können die zu transportierenden Güter auf geeignete Weise direkt oder indirekt an einzelnen Transporteinheiten hängend gelagert und gefördert werden. Insbesondere die Ausbildung der Transporteinheiten wird dabei abhängig von der Art des Transportguts, wie zum Beispiel der Geometrie und/oder der Masse, bestimmt.

Unter dem Begriff «Warenstrom» wird in dieser Beschreibung eine Abfolge von einzelnen Transporteinheiten mit Transportgütern verstanden, die in einem Hängefördersystem hintereinander in einer allgemeinen Förderrichtung linear gefördert werden.

Kleinere Stückgüter können beispielsweise in entsprechend dimensionierten Behältern, insbesondere Transporttaschen, an der Transporteinheit hängend gelagert und gefördert werden.

Für Druckerzeugnisse haben sich Greifervorrichtungen bewährt, welche unterhalb der Transporteinheit angebracht sind.

An Kleiderbügeln aufgehängte Kleidungsstücke können durch Einhängen des Kleiderbügelhakens in einer Aufhängevorrichtung der Transporteinheit hängend gelagert und gefördert werden.

Für grössere Transportgüter wie beispielsweise Karosserieteile und Baugruppen für die Automobilproduktion, oder Einzelelemente für die Bauindustrie wie beispielsweise Türen, Badewannen, Fensterelementen etc. werden die Transporteinheiten typischerweise entsprechend gross dimensioniert, wobei zusätzlich mobile Bodenplatten, Container oder Transportgestelle zu Anwendung kommen können.

So zeigt beispielsweise die internationale Patentanmeldung PCT/EP2018/072975, veröffentlich als WO 2019/042916 A1, einen Transportträger für eine Hängefördervorrichtung, der zur Verwendung für verschiedene Transportgütern angepasst werden kann. Der Transportträger umfasst Trägerelemente, welche mindestens einen Aufnahmeplatz für die Aufnahme eines Transportgutes ausbilden, wobei die Trägerelemente in mindestens einer Adaptierkonfiguration relativ zueinander bewegbar sind, und in mindestens einer Arretierkonfiguration arretierbar sind. In der Adaptierkonfiguration sind die Trägerelemente derart relativ zueinander bewegbar, dass die Geometrie des Aufnahmeplatzes und/oder die räumliche Ausdehnung des Transportträgers veränderbar ist.

Hängefördersysteme können insbesondere als schwerkraftgeförderte Fördersysteme realisiert werden, bei welchen sich einzeln bewegbare Transporteinheiten einen mit Rädern ausgestatteten Laufwagen aufweisen, der sich auf entsprechenden Laufschienen fortbewegt. Ein vorteilhaftes Beispiel eines solchen schwerkraftgeförderten, schienengeführten Fördersystems ist aus der US 2018/0215547 A1 bekannt. Die einzelnen Transporteinheiten können sich auf abfallenden Förderstrecken durch das Eigengewicht schwerkraftgetrieben ohne zusätzlichen Antrieb fortbewegen.

Um horizontale oder ansteigende Streckenabschnitte zu überwinden, können die Transporteinheiten vorübergehend mit externen Fördervorrichtungen in Wirkverbindung gebracht werden. Für längere Streckenabschnitte und ansteigende Strecken sind dafür insbesondere Schleppkreisförderer (Power-and-Free Förderer) geeignet, bei welchem die einzelnen Transporteinheiten, in der Regel deren Laufwagen, vorübergehend an eine kontinuierlich angetriebene Förderkette gekoppelt werden, beispielsweise mittels eines Kopplungsbolzens des Laufwagens, welcher von einem Mitnehmer der Förderkette geschoben wird. Soll die aktive Förderung beendet werden, wird die Transporteinheit wieder von der Förderkette abgekoppelt beziehungsweise freigegeben.

US 2018/0037413 A1 zeigt eine vorteilhafte Variante eines Schleppkreisförderers, welcher besonders für eine im Wesentlichen horizontale Förderung geeignet ist. Bei diesem Schleppkreisförderer können beispielsweise Transporteinheiten je nach Bedarf über Weichen einem Umlaufförderer zugeführt werden, der einen geschlossenen Förderpfad bildet, und können an den Umlaufförderer gekoppelt werden. Bei Bedarf können die Transporteinheiten wieder vom Umlaufförderer abgekoppelt und über Weichen weggeführt werden.

Für kürzere Förderstrecken können auch Schneckenantriebe verwendet werden, bei welchen ein Kopplungsbolzen eines Laufwagens in einem spiralförmig umlaufenden Kulissengang eines parallel zum Förderpfad angeordneten, entlang der Längsachse rotierenden Zylinders angeordnet ist. Durch die Längsdrehung des Schneckenantriebszylinders erfolgt ein Antrieb des Laufwagens, und damit der Transporteinheit, in Längsrichtung des Schneckenantriebszylinders. Über eine geeignete Wahl der Steigung der spiralförmigen Kulissengangs kann die longitudinale Fördergeschwindigkeit in Abhängigkeit von der ebenfalls regelbaren Drehzahl des Schneckenantriebs eingestellt werden.

Hängefördersysteme mit individuell förderbaren Transporteinheiten sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc. So können beispielsweise in Logistikzentren von Versandhandelsfirmen Hängefördersysteme verwendet werden, um eine Vielzahl von Artikeln verschiedener Grösse und Gewicht einzulagern, und mit dem gleichen Hängefördersystem, also ohne Wechsel des Fördermediums, Gruppen von Artikeln gemäss den jeweiligen Kundenaufträgen zu kommissionieren und für den Versand bereitzustellen.

Ein für Hängefördersysteme relevanter Aspekt ist dabei das einfache, reibungslose und effiziente Einbringen von Waren in unbelegte Transporteinheiten und Entnehmen der Waren aus den Transporteinheiten. Ein manuelles Befüllen von bereitgestellten unbelegten Transporteinheiten wie beispielsweise Transporttaschen bzw. ein manuelles Entnehmen der Waren aus den Transporttaschen erlaubt eine flexible Handhabung verschiedener Waren, ist jedoch langsam und kostenintensiv. WO 2018/142242 A1 offenbart eine vorteilhafte Vorrichtung zum automatisierten Befüllen von hängend geförderten Transporttaschen. WO 2018/142243 A1 offenbart eine vorteilhafte Vorrichtung zum automatisierten Entleeren von hängend geförderten Transporttaschen.

Ein anderer wichtiger Aspekt bei Logistikanlagen basierend auf Hängefördersystemen ist das Sortieren von Transporteinheiten und das Zusammenstellen von Gruppen von Transporteinheiten, beispielsweise um Transporteinheiten mit Waren eines Kommissionierungsauftrags bereitzustellen, oder um Halbfabrikate in einer komplexen Produktionskette korrekt und effizient zu verteilen.

Aus US 5799800 ist eine Sortieranlage für ein Hängefördersystem mit einzeln förderbaren Transporteinheiten bekannt. Transporteinheiten werden in unsortierter Reihenfolge auf ein Fördersystem mit geschlossenem Förderpfad aufgebracht. Die Transporteinheiten werden gezielt auf vom Förderpfad abzweigende Sammelstrecken geführt, und werden in einer geeigneten geänderten Reihenfolge wieder auf den Förderpfad zurückgeführt, wodurch eine Vorsortierung erfolgt. Über stromabwärts angeordnete weitere Blöcke von Sammelstrecken wird dieser Vorgang wiederholt, bis die gewünschte Reihenfolge von Transporteinheiten erreicht ist. Eine solche Sortieranlage wird besonders als einzige oder letzte Sortierstufe im kontinuierlichen Warenstrom in Kommissionierungsanlagen vor der Verteilung auf die einzelnen Kommissionierungsplätze verwendet. Für eine gute Sortierleistung sind ausreichend hohe Speicherkapazitäten notwendig, wodurch der Flächenbedarf entsprechend hoch ist.

Eine andere, funktionsverwandte Sortieranlage ist aus US 2002/0053535 A1 bekannt, in der ein Warenstrom von unsortierten Objekten über mehrere Sortierläufe in eine gewünschte Reihenfolge gebracht werden kann. In einem ersten Sortierlauf werden die zu sortierenden Objekte auf eine Mehrzahl von Staustrecken eines ersten Blockes aufgegeben. In einem zweiten Sortierlauf werden die Objekte von dem ersten Block von Staustrecken in einen zweiten Block von Staustrecken übergeben. In einem dritten Sortierlauf werden die Objekte von dem zweiten Block von Staustrecken zurück in den ersten Block von Staustrecken übergeben. Durch die hintereinander geschalteten Sortierläufe können die Blöcke von Sortierstrecken mehrfach verwendet werden, wodurch der Flächenbedarf geringer ist. Hingegen ist die Verwendung in kontinuierlichen Warenströmen durch die batchweise Verarbeitung ineffizient.

Noch eine andere Sortieranlage für Hängefördersysteme ist aus EP 0582224 A1 bekannt. Bei dieser Sortieranlage werden Transporteinheiten aus einem Förderkreis auf eine Mehrzahl von Speicherkreisen verteilt und von diesen in gewünschter Reihenfolge wieder auf den Förderkreis übergeben. Ähnliche Sortieranlagen sind auch aus WO 95/27672 A1 und DE 20103664 U1 und WO 2013/029192 A1 bekannt. Der Flächenbedarf für diesen Typ von Sortieranlagen ist vergleichsweise hoch.

EP 1035047 A2 offenbart ein Hängefördersystem mit einem Warenspeicher bestehend aus einer Mehrzahl parallel angeordneter Speicherstrecken, der sowohl als Eingangsspeicher zur Aufnahme von eingehenden Waren als auch als Ausgangsspeicher für Ausgangswaren nutzbar ist.

Aus WO 2018/020352 A1 ist ein Digitaldruck-Verarbeitungssystem bekannt, bei welchem verschiedene Teilprodukte, Zwischenprodukte und Endprodukte von Produktionsanlagen und Bearbeitungsanlagen an ein Hängefördersystem mit umlaufendem Förderpfad abgegeben bzw. von diesem übernommen werden. Mit dem Hängefördersystem können auch Speichervorrichtungen mit grossen Speichervolumen verbunden sein, die eine Vielzahl von Elementen aus dem Hängefördersystem übernehmen und in unveränderter Reihenfolge an der gleichen Stelle wieder in das Hängefördersystem abgeben können. Eine Sortierwirkung kann damit nicht effizient erreicht werden.

WO 2013/029192 A2 zeigt ein Hängefördersystem, bei welchem von einem Eingabeabschnitt Transporteinheiten mit Transportgütern batchweise in eine Mehrzahl von kreisförmig umlaufenden Speicherkreisen übergeben werden. In einem Speicherkreis werden jeweils Transporteinheiten mit identischen Transportgütern eingespeichert. Von den Speicherkreisen werden dann die Transporteinheiten wieder an einen linearen Ausgabeabschnitt abgegeben. Durch gezieltes Abrufen von Transportgütern aus den verschiedenen Speicherkreisen können Gruppen von verschiedenen Transportgütern zusammengestellt werden. Die Speicherkreise können als geschlossene Wendelförderer ausgestaltet sein, mit einem ersten horizontalen Förderabschnitt, in welchem Transporteinheiten aus dem Eingabeabschnitt kommend eingeschleust und in den Ausgabeabschnitt ausgeschleust werden können. In einem anschliessenden zweiten Abschnitt werden die Transporteinheiten entgegen der Schwerkraft mit einer Fördervorrichtung nach oben gefördert, In einem dritten Abschnitt werden sie schliesslich schwerkraftgetrieben auf einem spiralförmigen Förderpfad nach unten gefördert, und gegen wieder in den ersten horizontalen Abschnitt über. Dieser längste Abschnitt dient als Speicherabschnitt.

Die internationale Patentanmeldung PCT/EP2018/069214, veröffentlicht als WO 2019/016120 A1, offenbart eine vorteilhafte Anlage zum Kommissionieren von hängend transportierbaren Waren, welche unter anderem einen Zwischenspeicher mit einem Umlaufförderer aufweist, mit welchem neben einer Zwischenspeicherfunktion eine gewisse Vorsortierung der Waren erzielt werden kann. Der Umlaufförderer ist in zwei Bereiche unterteilt. In einem ersten Bereich wird durch eine Mehrzahl von parallelen, als Stiche von der Förderstrecke des Umlaufförderers abgehenden Speicherstrecken ein dynamischer Speicher gebildet. Analog bilden in einem zweiten Bereich eine Mehrzahl von parallelen, als Stiche von der Förderstrecke des Umlaufförderers abgehenden Speicherstrecken einen Abrufspeicher. Für den Transport der Waren vom dynamischen Speicher zum Abrufspeicher ist der Umlaufförderer vorgesehen.

Die bekannten Sortieranlagen sind vor allem für Kommissionierungsanlagen geeignet, bei welchen eine Vielzahl von Transportgütern schnell aus einem Lager entnommen, zur Sicherstellung eines kontinuierlichen Warenstromes in einem Zwischenspeicher gepuffert, und in einer oder mehreren Stufen sortiert werden, um anschliessend gruppiert an entsprechende Ausgabestellen gefördert zu werden. Die zu fördernden Transporteinheiten haben ein vergleichsweise geringes Gewicht und Volumen, was eine entsprechend schnelle Förderung und kompakte Lagerung ermöglicht. Der entsprechende logistische Ablauf ist vergleichsweise einfach und standardisierbar, und die einzelnen logistischen Operationen in Form der abzuwickelnden Kommissionierungsaufträge zeitlich und inhaltlich klar abgegrenzt.

Für komplexere logistische Abläufe wie die Förderung von verschiedenen, sich unterscheidenden Halbfabrikaten innerhalb einer Fabrikationsanlage, beispielsweise für die Automobilproduktion, weisen die bekannten Zwischenspeicheranlagen beziehungsweise Sortieranlagen Nachteile auf. Zum einen ist der Platzbedarf für die Vielzahl von Speicherstrecken für die vergleichsweise grossen Transportgüter wie beispielsweise ganze Karosserieteile ungleich grösser. Zum anderen ist die Sortierfunktion auf eine effiziente Sortierung und Förderung von Gruppen von Transportgütern optimiert, nicht jedoch auf die effiziente Lenkung vorn Warenströmen, bei welchen einzelne Transportgüter von einer Vielzahl von Zugangsorten übernommen, und in der richtigen Reihenfolge zur richtigen Zeit an einer Vielzahl von Zielorten abgeliefert werden müssen.

Ebenso sind die bekannten Zwischenspeicheranlagen beziehungsweise Sortieranlagen wenig effizient bei der Berücksichtigung von Änderungen der logistischen Operationen während ihrer Ausführung. So kann es beispielsweise notwendig sein, aufgrund des Ausfalls eines Teilelements der Produktionskette, beispielsweise einer Montagelinie als Zielort von Transportgütern, oder einer Produktionsanlage ans Zugangsort von Transportgütern, die Förderaufträge kurzfristig umzustellen, um einen kostspieligen Produktionsunterbruch zu vermeiden oder zu minimieren. Diese erfordert gegebenenfalls eine Umsortierung und geänderte Zwischenspeicherung der Transportgüter, was mit den bekannten Anlagen aufwendig und wenig effizient ist.

Es besteht allgemein das Bedürfnis nach Fortschritten in diesem Gebiet der Technik.

### Darstellung der Erfindung

Eine Aufgabe der Erfindung ist es, eine Pufferspeichereinrichtung für Hängefördersysteme mit einzeln förderbaren Transporteinheiten zur Verfügung zu stellen, welche die oben erwähnten und andere Nachteile nicht aufweist. Insbesondere soll eine solche Pufferspeichereinrichtung ihre Primärfunktion als Pufferspeicher erfüllen können, also in einem Hängefördersystem auf einem Förderpfad zugeförderte Transporteinheiten für eine spätere Weiterverwendung bzw. Weiterförderung vorübergehend zu speichern, um so insbesondere temporäre Unterschiede zwischen der Zuförderungsrate und der Wegfödrerungsrate auszugleichen beziehungsweise zu puffern.

Weiter soll eine erfindungsgemässe Pufferspeichereinrichtung als Sekundärfunktion eine Sortierfunktionalität bereitstellen, mit welcher die Transporteinheiten, welche die erfindungsgemässe Pufferspeichereinrichtung passieren, innerhalb des Warenstroms umsortiert werden können.

Eine solche Pufferspeichervorrichtung soll den Sortieraufwand stromabwärts zur Pufferspeichereinrichtung reduzieren.

Eine erfindungsgemässe Pufferspeichereinrichtung soll insbesondere für schwere und/oder voluminöse Transportgüter geeignet sein, bei welchen die maximale Fördergeschwindigkeit der Transporteinheiten aus physikalischen Gründen stark begrenzt ist, und soll insbesondere auch für solche Transportgüter eine effiziente Sortierfunktionalität bereitstellen.

Eine solche Pufferspeichereinrichtung soll flexibel betreibbar sein und dennoch eine hohe Durchsatzgeschwindigkeit gewährleisten. Sie soll einfach an sich ändernde Betriebsparameter angepasst werden können, beispielsweise geänderte Anforderungen an die Durchsatzgeschwindigkeit oder die Speicherkapazität, oder kurzfristige Änderungen im Produktionsablauf.

Eine solche Pufferspeichereinrichtung soll kompakt aufgebaut sein, und einen möglichst kleinen Flächenbedarf und Volumenbedarf ausweisen.

Weiter soll eine solche Pufferspeichereinrichtung möglichst effizient und kostengünstig aufbaubar und betreibbar sein. Insbesondere zur Minimierung des Energieverbrauchs soll die Förderung der Transporteinheiten in der Pufferspeichereinrichtung hauptsächlich schwerkraftgetrieben erfolgen.

Sie soll eine geringe Ausfallwahrscheinlichkeit aufweisen, um teure Standzeiten und die damit zusammenhängenden negativen Auswirkungen auf den operativen Betrieb eines Hängefördersystems und des gesamten logistischen Systems zu minimieren.

Diese und andere Aufgaben werden gelöst durch eine erfindungsgemässe Pufferspeichereinrichtung, ein erfindungsgemässes Pufferspeichersystem und eine erfindungsgemässe Hängefördereinrichtung gemäss den unabhängigen Ansprüchen. Weitere bevorzugte Ausführungsformen sind in den abhängigen Ansprüchen gegeben.

Ein erster Aspekt der Erfindung betrifft eine Pufferspeichereinrichtung für ein Hängefördersystem mit einzeln förderbaren Transporteinheiten. Das Hängefördersystem weist einen geschlossenen Förderpfad auf, umfassend eine Pufferstrecke, entlang welcher Transporteinheiten stromabwärts förderbar sind, eine Zuführstrecke zur Zuförderung von Transporteinheiten an einem Zuführungspunkt der Pufferstrecke, eine Wegführstrecke zur Wegförderung von Transporteinheiten an einem Wegführungspunkt der Pufferstrecke, und eine oder mehrere zusätzliche Kurzschlussstrecken, welche jeweils einen Startpunkt entlang der Pufferstrecke mit einem Zielpunkt entlang der Pufferstrecke verbinden.

Eine solche Kurzschlussstrecke erlaubt es, Transporteinheiten gezielt aus dem Warenstrom auf der Pufferstrecke zu entnehmen, und diese an anderer Stelle wieder gezielt in den Warenstrom auf der Pufferstrecke einzubringen, um so im fliessenden Warenstrom eine Umplatzierung von Transporteinheiten zu erreichen. Es resultiert ein Sortiereffekt.

Vorteilhaft bildet in einer solchen Pufferspeichereinrichtung eine Kurzschlusstrecke eine Rückführstrecke aus, welche mit der Pufferstrecke einen geschlossenen Förderpfad bildet.

Vorteilhaft sind eine oder mehrere Kurzschlussstrecken als Steigstrecke ausgestaltet, welche den Startpunkt der Kurzschlussstrecke mit einem stromaufwärts zum genannten Startpunkt liegenden Zielpunkt der Kurzschlussstrecke verbindet. Der Begriff Steigstrecke ist in diesem Zusammenhang auf die Förderung stromaufwärts, entgegen der allgemeinen Förderrichtung des Warenstroms im Pufferspeicher, zu verstehen. Auf diese Weise kann eine in eine Kurzschlussstrecke ausgeschleuste Transporteinheit innerhalb des Warenstroms von seiner ursprünglichen Position stromaufwärts nach hinten versetzt werden. Ist die Pufferstrecke abfallend, beispielsweise bei schwerkraftgetriebener Förderung des Warenstroms, so benötigt eine Steigstrecke einen Antrieb, mit dem die Transporteinheiten auf der Steigstrecke den Höhenunterscheid überwinden können. Jedoch kann die Pufferstrecke auch ansteigend ausgestaltet sein, so dass eine schwerkraftgetriebene Förderung der Transporteinheiten auf der Steigstrecke möglich wird.

Alternativ oder zusätzlich können vorteilhaft eine oder mehrere Kurzschlussstrecken als Fallstrecke ausgestaltet sein, welche den Startpunkt der Kurzschlussstrecke mit einem stromabwärts zum genannten Startpunkt liegenden Zielpunkt der Kurzschlussstrecke verbindet. Der Begriff Fallstrecke ist in diesem Zusammenhang auf die Förderung stromabwärts, in Richtung der allgemeinen Förderrichtung des Warenstroms im Pufferspeicher, zu verstehen. Auf diese Weise kann eine in eine Kurzschlussstrecke ausgeschleuste Transporteinheit innerhalb des Warenstroms von seiner ursprünglichen Position stromabwärts nach vorne versetzt werden, indem es auf der Fallstrecke eine Anzahl ursprünglich vor ihm liegende Transporteinheiten überholt. Jedoch kann auch eine Versetzung der Transporteinheit im Warenstrom nach hinten erreicht werden: Erreicht eine Transporteinheit auf der Kurzschlussstrecke den Zielpunkt später als auf dem ursprünglichen Förderpfad, so überholt eine gewisse Anzahl ursprünglich vor dieser Transporteinheit liegender Transporteinheiten die betreffende Transporteinheit.

Eine Differenz in der Fördergeschwindigkeit zwischen Startpunkt und Zielpunkt der Fallstrecke bzw. dem entsprechenden Abschnitt der Pufferstrecke kann beispielsweise durch eine unterschiedliche Länge der zu absolvierenden Strecken erzielt werden, oder durch eine unterschiedlich schnelle Förderung, beispielsweise aufgrund verschieden starker Neigungen der Strecken bei Schwerkraftförderung, oder aufgrund unterschiedlicher Fördergeschwindigkeiten eines Förderantriebs.

Eine erfindungsgemässe Pufferspeichereinrichtung kann zwei oder mehr Zuführstrecken zur Zuförderung von Transporteinheiten aufweisen.

Besonders vorteilhaft münden bei einer solchen Ausführungsform der Pufferspeichereinrichtung zwei oder mehr Zuführstrecken an zwei oder mehr Zuführungspunkten in die Pufferstrecke ein. Eine solche Konfiguration erlaubt eine gewisse Vorsortierung bereits dadurch, dass das Einspeisen der Transporteinheiten von den verschiedenen Zuführstrecken nicht zufällig erfolgt, sondern so, dass eine bestimmte Platzierung im Warenstrom erzielt wird.

Eine erfindungsgemässe Pufferspeichereinrichtung kann weiter zwei oder mehr Wegführstrecken zur Wegförderung von Transporteinheiten aufweisen.

Besonders vorteilhaft zweigen bei einer solchen Ausführungsform der Pufferspeichereinrichtung zwei oder mehr Wegführstrecken an zwei oder mehr Wegführungspunkten von der Pufferstrecke ab. Eine solche Konfiguration erlaubt eine Verdichtung der Transporteinheiten auf der Pufferstrecke nach einem Wegführungspunkt, da dort jeweils ein Teil des Warenstroms entnommen und auf der nachgeschalteten Wegführstrecke weggeführt wird.

Bei einer erfindungsgemässen Pufferspeichereinrichtung weist vorteilhaft die gesamte Pufferstrecke oder ein Teil der Pufferstrecke ein Gefälle auf.

Vorteilhaft sind bei einer erfindungsgemässen Pufferspeichereinrichtung entlang der gesamten Pufferstrecke oder eines Teils der Pufferstrecke die Transporteinheiten durch die Schwerkraft förderbar.

Vorteilhaft sind bei einer erfindungsgemässen Pufferspeichereinrichtung auf der gesamten Pufferstrecke oder einem Teil der Pufferstrecke die Transporteinheiten angetrieben förderbar, beispielsweise durch einen Schleppkreisförderer oder einen Umlaufförderer.

Die gesamte Pufferstrecke oder ein Teil der Pufferstrecke einer erfindungsgemässen Pufferspeichereinrichtung kann die Form eines abwärts führenden Förderpfades aufweisen. Ein solcher abwärts führender Förderpfad kann beispielsweise als abfallende Spirale ausgestaltet sein, um die Volumenausnutzung zu maximieren.

Bei einer vorteilhaften Ausführungsform einer erfindungsgemässen Pufferspeichereinrichtung sind entlang der Pufferstrecke ein oder mehrere Staupunkte vorgesehen, an welchen Transporteinheiten gezielt gestaut und wieder freigegeben werden können. Auf diese Weise kann beispielsweise die effektive Fördergeschwindigkeit auf einer abfallenden Pufferstrecke so gesteuert werden, dass Transportelemente von einer Kurzschlusstrecke her am der richtigen Stelle im Warenstrom eingeschleust werden können.

Entlang des Förderpfads einer erfindungsgemässen Pufferspeichereinrichtung kann eine Speicherringvorrichtung vorgesehen sein, welche Transporteinheiten an einem Übergabepunkt aus der Pufferspeichereinrichtung übernehmen und einspeichern und wieder ausspeichern und an dem Übergabepunkt an die Pufferspeichereinrichtung übergeben kann. Eine solche Speicherringvorrichtung entspricht im Wesentlichen einer Kurschlussstrecke, bei welcher Startpunkt und Zielpunkt entlang des Förderpfads identisch sind.

Eine erfindungsgemässe Pufferspeichereinrichtung mit einer solchen Speicherringvorrichtung hat insbesondere den Vorteil, dass Gruppen von Transporteinheiten vorübergehend aus dem Warenstrom des Pufferspeichers entnommen werden können, ohne dass sie zeitnah wieder eingeschleust werden müssen. Es kann auch die Speicherkapazität einer erfindungsgemässen Pufferspeichereinrichtung um die Kapazität des Speicherrings erhöht werden, indem der auf dem Förderpfad der Pufferstrecke am Übergabepunkt ankommende Warenstrom in einer Schleife durch den Ringspeicher und anschliessend via den Übergabepunkt stromabwärts zurück auf die Pufferstrecke geleitet wird.

Entlang des Förderpfads einer erfindungsgemässen Pufferspeichereinrichtung kann weiter eine Sortiervorrichtung vorgesehen sein, welche Transporteinheiten aus der Pufferspeichereinrichtung übernehmen, sortieren, und in geänderter Reihenfolge wieder an die Pufferspeichereinrichtung übergeben kann.

Bei komplexen Hängefördersystemen kann es notwendig sein, den räumlich Standort einzelner oder auch aller Transporteinheiten bzw. von deren Transportgütern rasch und effizient bestimmen oder überwachen zu können.

Vorteilhaft weist eine erfindungsgemässe Pufferspeichereinrichtung ein Ortungssystem auf, mit welchem der Standort von Transporteinheiten und/oder Transportgütern innerhalb der Pufferspeichereinrichtung bestimmt werden kann, beispielsweise ein funkbasiertes Ortungssystem.

Die internationale Patentanmeldung PCT/EP2018/072979, veröffentlich als WO 2019/042918 A1, offenbart ein dazu geeignetes System, bei welchem die räumliche Position von Transporteinheiten und/oder Transportgütern innerhalb eines Hängefördersystems mittels radiofrequenzgestützten Mitteln, beispielsweise Funkortung, ermittelt werden kann.

Eine erfindungsgemässe Pufferspeichereinrichtung kann ein Überwachungssystem mit einer oder mehreren entlang des Förderpfads angeordneten Sensoreinheiten aufweisen, mit welchen Daten von Datenträgerelementen passierender Transporteinheiten und/oder passierender Transportgüter empfangen werden können.

Eine solche Ausführungsform hat den Vorteil, dass das Passieren einzelner Transporteinheiten bzw. Transportgüter an Kontrollpunkten entlang des Förderpfads registriert und laufend mit einem Sollzustand verglichen werden kann. Auf diese Weise ist es möglich, Abweichungen vom Sollzustand im Betrieb der Pufferspeichereinrichtung rasch erkennen zu können. Solche Abweichungen können beispielsweise durch Fehlfunktionen von einzelnen Elementen verursacht sein, beispielsweise blockierten Weichenelementen. Solche Fehlfunktionen können auf diese Weise sehr rasch identifiziert oder eingegrenzt werden, so dass Reparaturmassnahmen eingeleitet werden können. Gleichzeitig kann der Betrieb der Anlage auf den aktuellen Zustand der Pufferspeichereinrichtung angepasst werden, indem beispielsweise ein fehlerhaft funktionierendes Element von der Steuereinrichtung bei der Steuerung der Pufferspeichereinrichtung berücksichtigt wird.

Ein zweiter Aspekt der Erfindung betrifft ein vorteilhaftes Pufferspeichersystem mit zwei oder mehr parallel geschalteten erfindungsgemässen Pufferspeichereinrichtungen.

Ein solches Pufferspeichersystem erlaubt eine überproportionale Erhöhung der Speicherkapazität gegenüber einem Pufferspeichersystem mit nur einer Pufferspeichereinrichtung. Durch geeignete Anordnung der Förderpfade der beiden Pufferspeichereinrichtungen kann das Raumvolumen besser genutzt werden, wodurch Verhältnis von erreichbarer Speicherkapazität zu Volumenbedarf und/oder Flächenbedarf verbessert wird.

Bei einer vorteilhaften Variante eines solchen Pufferspeichersystems sind zwischen zwei oder mehr parallel geschalteten Pufferspeichereinrichtungen Verbindungsstrecken vorgesehen, über welche Transporteinheiten von einer Pufferspeichereinrichtung zu einer anderen Pufferspeichereinrichtung wechseln können. Funktionell können so Streckenabschnitte einer Pufferspeichereinrichtung als Kurzschlusstrecken einer anderen Pufferspeichereinrichtung dienen, und umgekehrt. Ein solches Pufferspeichersystem erlaubt sehr flexible Sortierfunktionalitäten im laufenden Warenstrom.

Ein dritter Aspekt der Erfindung betrifft ein vorteilhaftes Hängefördersystem mit einer erfindungsgemässen Pufferspeichereinrichtung beziehungsweise einem erfindungsgemässen Pufferspeichersystem.

Bei einem erfindungsgemässen Hängefördersystem kann der erfindungsgemässen Pufferspeichereinrichtung beziehungsweise dem erfindungsgemässen Pufferspeichersystem stromabwärts eine Sortiervorrichtung nachgeschaltet werden. Mit einer durch die erfindungsgemässe Pufferspeichereinrichtung während des Passierens des Pufferspeichers erzeugten Vorsortierung im Strom der Transporteinheiten kann eine solche nachgeschaltete Sortiervorrichtung unter anderem effizienter betrieben oder kleiner dimensioniert werden.

Ein vierter Aspekt der Erfindung betrifft eine Transporteinheit für ein Hängefördersystem, welche für die Aufnahme einer Mehrzahl von Transportgütern vorgesehen ist, die an einem Längsende eine Auskragung aufweisen, welche von geeigneten Haltemitteln hintergriffen werden kann, insbesondere Flaschen, Spraydosen und anderen Behältern.

Eine solche vorteilhafte Transporteinheit umfasst einen Laufwagen, mit welchem die Transporteinheit in einem Hängefördersystem förderbar ist, und eine Trägervorrichtung.

Besonders vorteilhaft ist die Trägervorrichtung in der Betriebsposition der Transporteinheit unterhalb des Laufwagens angeordnet.

Die Trägervorrichtung weist vorteilhaft mindestens einen Trägerkanal in Form eines nach unten offenen hinterschnittenen Hohlprofils auf.

Der Trägerkanal beziehungsweise das Hohlprofil können einteilig gestaltet sein, oder können aus mehreren Teilen zusammengefügt sein.

Der Trägerkanal der Trägervorrichtung ist in der Betriebsposition der Transporteinheit im Wesentlichen waagrecht orientiert. Als Betriebsposition der Transporteinheit wird die Position der Transporteinheit verstanden, welche diese auf einem horizontalen Abschnitt einer Laufschiene eines Hängefördersystems einnimmt.

Vorteilhaft weist die vorgenannte Transporteinheit eine erste Kopplungsvorrichtung auf, welche die Trägervorrichtung an den Laufwagen koppelt, und welche eine im Wesentlichen waagrechte Ausrichtung der Trägervorrichtung beziehungsweise des Trägerkanals sicherstellt, wenn sich die Transporteinheit auf einem nicht horizontalen Abschnitt einer Laufschiene eines Hängefördersystems befindet. Dies erlaubt es, mit beladenen Transporteinheiten Steigungen und Gefälle bis zu einem gewissen Höchstwert zu überwinden, ohne dass die Funktion der Trägervorrichtung beeinträchtigt wird.

Beispielsweise kann eine solche erste Kopplungsvorrichtung ein Gelenk aufweisen, so dass die Trägervorrichtung schwenkbar mit dem Laufwagen verbunden ist, und aufgrund ihres Eigengewichts selbsttätig stets die gewünschte waagrechte Ausrichtung einnimmt.

Viele Behälter, wie beispielsweise Flaschen oder Spraydosen und ähnliches weisen in Öffnungsbereich einen umlaufenden Kragen aus. Der nach unten offene, hinterschnittene Trägerkanal einer Transporteinheit ermöglicht das hängende Lagern solcher Behälter, indem die Auskragung auf den Vorsprüngen des hinterschnittenen Hohlprofils aufliegt. Dazu wird der obere Bereich der Behälter mit der Auskragung durch ein offenes Längsende des Trägerkanals in den Trägerkanal eingeschoben.

Vorteilhaft ist der Trägerkanal der Trägervorrichtung einer solchen Transporteinheit senkrecht zur Förderrichtung der Transporteinheit angeordnet. Dies erlaubt insbesondere eine automatisierte Beladung der Transporteinheit durch Einschieben von Behältern in den Trägerkanal von der Seite her, senkrecht zur Förderrichtung, vorzugsweise mit einer geeigneten Beladungsvorrichtung. Weiter können in einer derartigen Konfiguration die Transporteinheiten im Hängefördersystem maximal verdichtet hintereinander gestaut werden.

Besonders vorteilhaft weist eine solche Transporteinheit eine zweite Kopplungsvorrichtung auf, welche die Trägervorrichtung an den Laufwagen koppelt, und welche es erlaubt, die Ausrichtung des Trägerkanals der Trägervorrichtung in Bezug auf die Förder-richtung der Transporteinheit zu ändern, beispielsweise durch eine Drehung um die Senkrechte. Dies erlaubt es, die Ausrichtung der Trägervorrichtung je nach Betriebsmodus verschieden einzustellen. Beispielsweise kann in einem Transportmodus der Trägervorrichtung der Trägerkanal senkrecht zur Förderrichtung der Transporteinheit ausgerichtet sein, in einem Beladungsmodus der Trägervorrichtung in einem Winkel von 45° zur Förderrichtung, und in einem Entladungsmodus der Trägervorrichtung parallel zur Förderrichtung.

Beispielsweise kann eine solche zweite Kopplungsvorrichtung drehbare Hängelagermechanismen aufweisen wie sie beispielsweise in WO 2018/142242 A1 offenbart sind, und mit welchen eine Trägervorrichtung in mehreren stabilen Lageposition an einem Laufwagen hängend gelagert werden kann.

Vorteilhaft weist eine solche vorteilhafte Transporteinheit zwei oder mehr parallel und auf einer horizontalen Ebene nebeneinander angeordnete Trägerkanäle auf. Dies erlaubt eine Maximierung der Transportkapazität der Transporteinheit.

In einer vorteilhaften Variante einer solchen Transporteinheit sind die Vorsprünge, welche die Hinterschneidungen des Trägerkanals bilden, aus einem Material mit einem geringen Gleitreibungskoeffizienten gebildet, beispielsweise aus HDPE oder PTFE. Dies erleichtert beispielsweise ein gleitendes Einbringen der Transportgüter in die Trägervorrichtung, indem die Auskragungen der Transportgüter auf den Vorsprüngen des Trägerkanals gleiten kann.

In einer alternativen Variante einer solchen Transporteinheit sind die Vorsprünge, welche die Hinterschneidungen des Trägerkanals bilden, aus einem Material mit einem hohen Haftreibungskoeffizienten gebildet, beispielsweise aus einem gummiähnlichen Material. Bei einer solchen Variante werden die Transportgüter in die Trägervorrichtung eingebracht, ohne dass die Auskragungen der Transportgüter mit den Vorsprüngen des Trägerkanals in Kontakt sind. Nach Erreichen der Sollposition wird das Transportgut beispielsweise senkrecht abgesenkt, so dass nun die Auskragung auf den Vorsprüngen des Trägerkanals liegen bleibt, und in waagrechter Richtung reibschlüssig fixiert ist.

In einer besonders vorteilhaften Variante einer solchen Transporteinheit kann eine Öffnung an einem Längsende des Trägerkanals durch ein Verschlusselement, beispielsweise ein Federelement, reversibel verschlossen werden. Die Öffnung am anderen Längsende kann dauerhaft oder ebenfalls reversibel verschlossen sein. Die Behälter sind in dieser Konfiguration temporär formschlüssig im Trägerkanal gehalten, und können mit der Transporteinheit sicher transportiert werden.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands. In den Figuren und der dazugehörigen Beschreibung sind gleiche oder gleich wirkende Teile mit den gleichen oder ähnlichen Bezugszeichen versehen.
- Figur 1: zeigt schematisch eine erste mögliche Ausführungsform einer erfindungsgemässen Pufferspeichereinrichtung.
- Figur 2: zeigt schematisch eine zweite mögliche Ausführungsform einer erfindungsgemässen Pufferspeichereinrichtung.
- Figur 3: zeigt schematisch eine dritte mögliche Ausführungsform einer erfindungsgemässen Pufferspeichereinrichtung.
- Figur 4: zeigt schematisch eine vierte mögliche Ausführungsform einer erfindungsgemässen Pufferspeichereinrichtung.
- Figur 5: zeigt schematisch eine mögliche Ausführungsform eines erfindungsgemässen Hängespeichersystems mit drei parallelen erfindungsgemässen Pufferspeichereinrichtungen.
- Figur 6: zeigt schematisch ein Beispiel einer vorteilhaften Transporteinheit in Form einer Hängefördertasche, wie sie in einer erfindungsgemässen Pufferspeichereinrichtung eingesetzt werden kann.
- Figur 7: zeigt schematisch ein anderes Beispiel einer vorteilhaften Transporteinheit in Form eines Transportträgers, wie sie in einer erfindungsgemässen Pufferspeichereinrichtung eingesetzt werden kann.
- Figur 8: zeigt schematisch ein weiteres Beispiel einer vorteilhaften Transporteinheit zum hängenden Transport einer Mehrzahl von Transportgütern, wie sie in einer erfindungsgemässen Pufferspeichereinrichtung eingesetzt werden kann.
- Figur 9: zeigt schematisch die Transporteinheit aus Figur 8 in beladenem Zustand, (a) in einer perspektivischen Ansicht von schräg unten, mit teilweise nicht gezeigten Transportgütern, (b) in einer Seitenansicht senkrecht zur Förderrichtung, und (c) in einer Frontansicht in Förderrichtung.
- Figur 10: zeigt schematisch die Transporteinheit aus Figur 8, teilweise beladen und mit geöffnetem Verschlusselement.

### Wege zur Ausführung der Erfindung

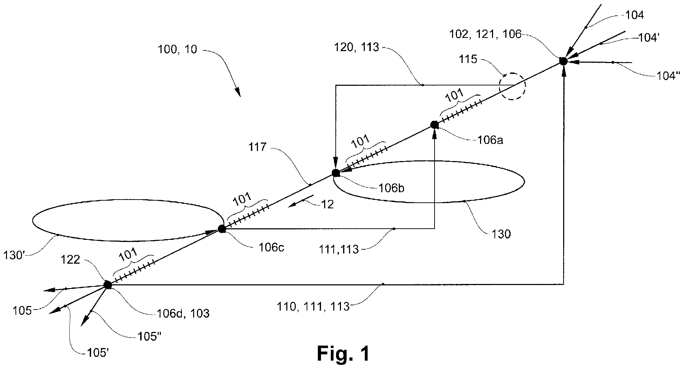

Eine mögliche Ausführungsvariante einer erfindungsgemässen Pufferspeichereinrichtung 100 für ein Hängefördersystem 10 mit einzeln förderbaren Transporteinheiten ist in Figur 1 rein schematisch dargestellt. Eine Pufferstrecke 117 verläuft abfallend von einem Anfangspunkt 121 der Pufferstrecke zu einem Endpunkt 122 der Pufferstrecke. Transporteinheiten können sich auf der abfallenden Pufferstrecke schwerkraftgetrieben stromabwärts entlang der Förderrichtung 12 fortbewegen.

Vom Endpunkt 122 der Pufferstrecke 117 führt eine Kurzschlussstrecke 113 in Form einer Rückführstrecke 110 zurück zum Anfangspunkt 102 der Pufferstrecke 117 und bildet mit der Pufferstrecke 117 einen geschlossenen Förderpfad.

Im gezeigten Ausführungsbeispiel laufen an einem Zuführungspunkt 102, der hier mit dem Anfangspunkt 121 der Pufferstrecke identisch ist, mehrere Zuführungsstrecken 104, 104', 104" zusammen, auf welchen Transporteinheiten von verschiedenen Quellen zugefördert werden können. Beispielsweise können in einer Lagereinrichtung Transportgüter ausgelagert und mittels der Transporteinheiten über eine Zuführstrecke der Pufferspeichereinrichtung 100 zugeführt werden, Ebenfalls können in verschiedenen Produktionsanlagen Halbfabrikate, Bauteile, etc. auf Transporteinheiten verladen und über eine Zuführstrecke dem Pufferspeicher 100 zugeführt werden.

An einem Wegführungspunkt 103, der hier mit dem Endpunkt 122 der Pufferstrecke 117 identisch ist, zweigen mehrere Wegführungsstrecken 105, 105', 105" ab, auf welchen Transporteinheiten an verschiedene Zielorte weitergefördert werden können, beispielsweise zu Produktionsanlagen, Ausgabestellen, weiteren Teilsysteme des Hängefördersystems, wie beispielsweise Sortiervorrichtungen, etc.

Stromabwärts zum Anfangspunkt 121 der Pufferstrecke 117 zweigt eine Kurzschlussstrecke 113 von der Pufferstrecke ab, die im gezeigten Beispiel als Fallstrecke 120 ausgestaltet ist, welche stromabwärts wieder in die Pufferstrecke einmündet. Das Ausschleusen von Transporteinheiten auf die Kurzschlusstrecke 113 am Startpunkt der Kurzschlusstrecke erfolgt über eine geeignete Weichenvorrichtung 115. Analog erfolgt auch das Einschleusen einer Transporteinheit zurück auf die Pufferstrecke am Zielpunkt der Kurzschlussstrecke über eine geeignete Weichenvorrichtung.

Die technische Ausgestaltung der Weichenvorrichtungen hängt von der konkreten Ausgestaltung des Hängefördersystems 10 ab. Entsprechende Weichenvorrichtungen für bestimmte Hängefördersysteme sind dem Fachmann bekannt.

Stromaufwärts zum Zielpunkt der Kurzschlussstrecke, an welcher die Kurzschlussstrecke 113 wieder in die Pufferstrecke 117 einmündet, ist ein Staupunkt 106b angeordnet, hinter welchem wiederum stromaufwärts auf der Pufferstrecke eine Staustrecke 101 liegt. Am Staupunkt ist eine Blockiervorrichtung vorgesehen, welche das schwerkraftgetriebene Weiterbewegen der Transporteinheiten reversibel verhindert, indem beispielsweise ein Laufwagen der Transporteinheit vorübergehend formschlüssig blockiert wird. Dies kann beispielsweise mit einer entsprechend gesteuerten Vereinzelungsvorrichtung erreicht werden.

Als Folge der vorübergehenden Blockierung des Förderpfads laufen weitere Transporteinheiten auf die blockierte Transporteinheit auf, und werden auf der Staustrecke 101 zurückgestaut. Wenn die Blockiervorrichtung die Transporteinheit wieder freigibt, bewegt sich diese wieder schwerkraftgefördert weiter entlang der Förderrichtung 12 stromabwärts.

Vorteilhaft ist die Blockiervorrichtung als Vereinzelungsvorrichtung ausgestaltet, welche auf der Pufferstrecke einen ausreichenden Laufabstand zwischen den zuvor gestauten Transporteinheiten sicherstellt.

Die verschiedenen Staupunkte 106, 106a, 106b, 106c, 106d im gezeigten Ausführungsbeispiel einer Pufferstrecke 117 haben unter anderem den Zweck, das Einschleusen von Transporteinheiten aus einer Kurzschlussstrecke in die Pufferstrecke zu steuern. Erst wenn eine Transporteinheit an der richtigen Stelle in den Warenstrom eingefügt ist, gibt die Blockiervorrichtung am Staupunkt den Warenstrom wieder frei. Weiter können die Staupunkte dazu dienen, die Speicherkapazität der erfindungsgemässen Pufferspeichereinrichtung zu erhöhen, da die effektive Fördergeschwindigkeit gesenkt und damit die effektive Dichte der Transporteinheiten über die gesamte Pufferstrecke erhöht wird.

Auf der Pufferstrecke 117 ist eine weitere Kurschlussstrecke 113 in Form einer Steigstrecke 111 vorgesehen, welche an einem Startpunkt unterhalb des Staupunktes 106c aus der Pufferstrecke 117 abzweigt, und stromaufwärts unterhalb eines Staupunktes 106a an einem Zielpunkt wieder in die Pufferstrecke 117 einmündet. Mit dieser Steigstrecke 113 ist es somit möglich, Transporteinheiten stromaufwärts wieder gezielt in den Warenstrom einzufügen.

Im gezeigten Ausführungsbeispiel sind weiter an zwei Stellen entlang der Pufferstrecke 117 Speicherringe 130, 130' vorgesehen, welche Transporteinheiten aus dem Warenstrom aufnehmen und wieder an den Warenstrom abgegeben können. Die Speicherringe 130, 130' entsprechen Kurzschlussstrecken, bei welchen der Startpunkt und der Zielpunkt zusammenfallen. Es sind verschiedene Speicherringe 130, 130' für Hängefördersysteme bekannt, welche in einer erfindungsgemässen Pufferspeichereinrichtung verwendet werden können.

Oberhalb der Zielpunkte der Speicherringe 130, 130' ist jeweils ein Staupunkt 106b, 106c vorgesehen, an welchen bei Bedarf der Warenstrom angehalten werden kann, um eine Transporteinheit aus dem betreffenden Speicherring in den Warenstrom einzufügen.

Die Speicherringe 130, 130' können aufgrund des First-In-First-Out-Prinzips auch als Zusatzschleife zur variablen Erweiterung der Pufferstrecke verwendet werden, indem beispielsweise der komplette Warenstrom in den Speicherring eingeleitet wird, und gleichzeitig der Inhalt des Speicherrings laufend aus dem Ringspeicher entleert und in unveränderter Reihenfolge stromabwärts auf die Pufferstrecke zurückgeführt wird. Je nach Förderfrequenz können die Transporteinheiten einzeln oder in Gruppen in den Speicherring eingebracht beziehungsweise aus diesem entnommen werden. Wird die Erweiterung der Pufferstrecke nicht mehr benötigt, werden die ankommenden Transporteinheiten am Staupunkt zurückgehalten, bis der Speicherring vollständig entleert ist, und anschliessend wieder freigegeben.

Analog können als Fallstrecken 120 ausgestaltete Kurzschlussstrecken zu einer vorübergehenden Verkürzung der Pufferstrecke eingesetzt werden, indem der gesamte Warenstrom über die entsprechende Kurzschlussstrecke umgeleitet wird.

Eine vorübergehende Änderung der effektiven Länge, und damit der Kapazität, der Pufferstrecke, wie sie oben vorgeschlagen wird, kann insbesondere dann vorteilhaft sein, wenn aufgrund grösserer Änderungen im Produktionsablauf grössere Umstellungen in der Zusammensetzung des kontinuierlichen Warenstroms notwendig werden, beispielsweise wegen eines Ausfalls einer Produktionslinie.

Ebenfalls nützlich sein kann eine Anpassung der Kapazität der Pufferstrecke beispielsweise, wenn sich die Kapazität einer Produktionsanlage erheblich ändert. Als Beispiel sei die Umstellung einer Produktionsanlage von einem Tagesproduktionsmodus auf einen Nachtproduktionsmodus genannt, während der weniger Personal eingesetzt wird, und daher die Produktionsrate stark reduziert ist. Entsprechend reduziert sich die Zufuhr von Bauteilen über die Pufferspeichereinrichtung. Durch Deaktivieren einer mit einem Speicherring realisierten Erweiterung der Pufferstrecke kann die Pufferspeichereinrichtung an den geringeren Kapazitätsbedarf angepasst werden.

Ein effizientes Sortieren setzt ausreichende Kapazitäten voraus, denn nahe an der Kapazitätsgrenze eines Sortiersystems kann ein Sortiervorgang oft ineffizient sein. Gleichzeitig sollte bei einer erfindungsgemässen Pufferspeichereinrichtung die Speicherkapazität im Normalbetrieb nicht zu hoch sein, weil dies den Volumenbedarf der Anlage unnötig erhöht, ohne für die erfindungsgemässe Sortierfunktion einen Mehrwert zu bringen. Durch das Ändern der effektiven Pufferstrecke bei Bedarf kann dann jedoch eine erfindungsgemässe Pufferspeichereinrichtung den Warenstrom effizienter an die geänderten Gegebenheiten anpassen, und zum Beispiel vorübergehend grössere Sortiervolumen effizient verarbeiten.

Die obenstehend beschriebene Pufferspeichereinrichtung hat insbesondere den Vorteil, dass die Transporteinheiten auf der Pufferstrecke und den als Fallstrecken ausgestalteten Kurzschlussstrecken gravitationsgetrieben förderbar sind, ohne aktive Antriebssysteme. Entsprechend wird der Energiebedarf während des Betriebs minimiert.

Bei den als Steigstrecken ausgestalteten Streckenabschnitten müssen die in der Regel als umlaufende Förderketten realisierten Fördermittel nicht im Dauerbetrieb laufen, sondern können bei Bedarf aktiviert werden. Auch im Dauerbetrieb ist der Energieverbrauch vergleichsweise gering, da im Verhältnis zur gesamten Strecke der Pufferspeichereinrichtung die Steigstrecken einen geringen Anteil einnehmen. Dies gilt insbesondere, wenn in einem geschlossenen Förderpfad die Steigung der Steigstrecken wesentlich grösser gewählt wird als das Gefälle der abfallenden Pufferstrecken.

Die Speicherringe können ebenfalls so realisiert werden, dass anstatt eines horizontalen Umlaufförderers eine Fallstrecke mit einer Steigstrecke verbunden wird

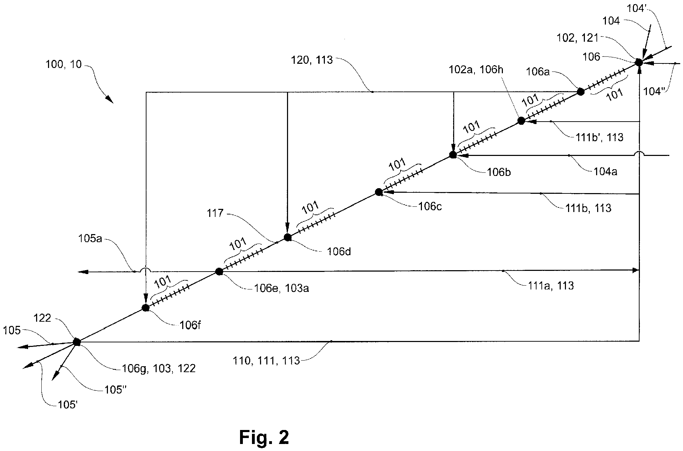

Ein weiteres schematisches Beispiel einer erfindungsgemässen Pufferspeichereinrichtung 100 in einem Hängefördersystem 10 ist in Figur 2 gezeigt. Eine Pufferstrecke 117 verläuft wie beim vorhergehenden Beispiel abfallend von einem Anfangspunkt 121 der Pufferstrecke zu einem Endpunkt 122 der Pufferstrecke, und vom Endpunkt 122 führt eine Kurzschlussstrecke 113 in Form einer Rückführstrecke 110 zurück zum Anfangspunkt 102. An einem mit dem Anfangspunkt 121 der Pufferstrecke identischen Zuführungspunkt 102 münden mehrere Zuführungsstrecken 104, 104', 104" in die Pufferstrecke 117 der Pufferspeichereinrichtung 100. An einem mit dem Endpunkt 122 der Pufferstrecke 117 identischen Wegführungspunkt 103 zweigen mehrere Wegführungsstrecken 105, 105', 105" von der Pufferstrecke 117 ab.

Zusätzlich mündet eine weitere Zuführstrecke 104a weiter stromabwärts an einem Zuführungspunkt 102a unterhalb eines Staupunktes 106b in die Pufferstrecke 117 ein. Durch eine solche Platzierung des Zuführungspunktes kann bereits ein Sortiereffekt erreicht werden.

Ebenfalls zweigt noch innerhalb der Pufferstrecke 117 eine weitere Wegführungsstrecke 105a an einem Wegführungspunkt 103a von der Pufferstrecke ab. Auch in diesem Fall kann so bereits ein Sortiereffekt erzielt werden.

Am Staupunkt 106a zweigt eine Kurzschlussstrecke 113 in Form einer Fallstrecke 120 von der Pufferstrecke 117 ab. Die Kurzschlussstrecke trennt sich später in mehrere Zweige auf, und mündet an drei verschiedenen Zielpunkten wieder in die Pufferstrecke, nämlich bei den Staupunkten 106b, 106d und 106f. Eine solche Kurzschlussstrecke 113 kann also eine Transporteinheit nicht nur an einer bestimmten Stelle der Pufferstrecke wieder in den Warenstrom einfügen, sondern kann dies flexibel, je nach Bedarf an der am besten geeigneten Stelle tun. Beispielsweise kann der Zielpunkt für jede auf die Kurzschlussstrecke 113 ausgeschleuste Transporteinheit so ausgewählt werden, dass der Warenstrom am wenigsten gehemmt wird.

Die als Rückführstrecke 110 ausgeführte Kurzschlussstrecke 113 verzweigt sich ebenfalls. Ein erster Zweig der Steigstrecke 111 mündet am Staupunkt 106 beim Anfangspunkt 102 der Pufferstrecke in die Pufferstrecke ein. Zwei andere Zweige 111b, 111b' der Steigstrecke 111 münden stromabwärts bei den Staupunkten 106h und 106c wieder in die Pufferstrecke 117 ein. Weiter zweigt beim Staupunkt 106 eine Kurzschlussstrecke 113 in Form einer Teilstrecken 111a aus der Pufferstrecke 117 ab, und mündet in die erste Steigstrecke 111 ein. Ein solches System von Steigstrecken erlaubt eine sehr flexible Verschiebung von Transporteinheit an andere Stellen stromaufwärts in Warenstrom.

In einer verallgemeinerten Ausführungsvariante einer erfindungsgemässen Pufferspeichereinrichtung zweigen mehrere Fallstrecken beziehungsweise Steigstrecken an verschiedenen Startpunkten aus der Pufferstrecke ab und münden an verschiedenen Zielpunkten wieder in die Pufferstrecke ein. Vorteilhaft fallen einzelne Streckenabschnitte der Fallstrecken beziehungsweise Steigstrecken zusammen.

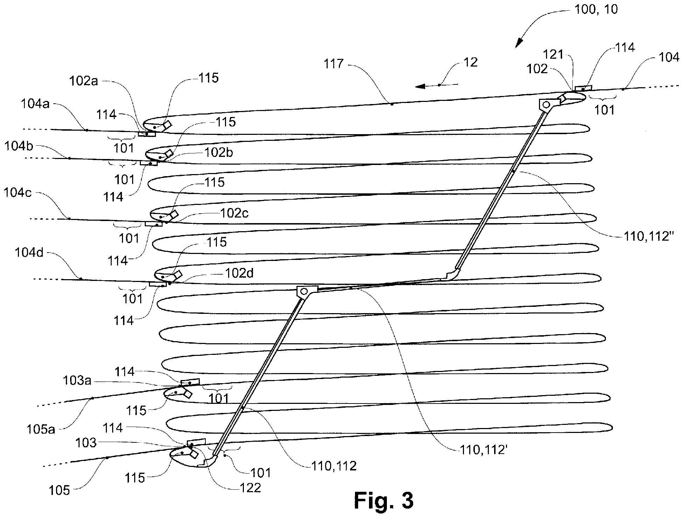

Noch ein weiteres Ausführungsbeispiel einer erfindungsgemässen Pufferspeichereinrichtung 110 ist in Figur 3 dargestellt. Die Pufferstrecke 117 hat die Form einer flachen Wendel, welche von einem Anfangspunkt 102 kontinuierlich abfallend entlang einer Förderrichtung zu einem tiefer liegenden Endpunkt 103 führt. Von dort führt eine Rückführstrecke als Steigstrecke zurück zum Anfangspunkt 102 der Pufferstrecke 117.

Im gezeigten Ausführungsbeispiel weist die Rückführstrecke 110 drei hintereinander angeordnete Steigfördervorrichtungen 112, 112', 112" auf, welche unterschiedliche Steigungswinkel aufweisen. Eine solche Unterteilung der Steigstrecke hat den Vorteil, dass die Belastung und der Energieverbrauch der Steigfördervorrichtungen geringer sind.

Eine erste Zuführungsstrecke 104 mündet am Startpunkt 102 in die Pufferstrecke 117. Vier weitere Zuführungsstrecken 104a, 104b, 104c, 104d münden an Zuführungspunkten 102a, 102b, 102c, 102d weiter stromabwärts in die Pufferstrecke 117 der Pufferspeichereinrichtung 110. Eine erste Wegführungsstrecke 105 zweigt am Wegführungspunkt 103 von der Pufferstrecke 117 ab. Eine weitere Wegführungsstrecke 105a zweigt an einem Wegführungspunkt 103a weiter stromaufwärts von der Pufferstrecke ab.

An den Punkten, an welchen die Zuführungsstrecken 103, 104a-104d bzw. die Rückführstrecke 110 in die Pufferstrecke 117 münden, bzw. die Wegführungsstrecken 105, 105a aus der Pufferstrecke 117 abzweigen, sind geeignete Weichenvorrichtungen 115 vorgesehen, die nur schematisch dargestellt sind. Vereinzelungsvorrichtungen 114, ebenfalls nur schematisch dargestellt, stauen den Warenstrom auf der Strecke, auf der sie angeordnet sind, und sorgen so für einen korrekten Betrieb der Weichenvorrichtungen 115, indem sie insbesondere Transporteinheiten nur einzeln für den Weitertransport freigeben, und Kollisionen von Transporteinheiten verhindern.

Eine solche Kombination von mehreren Zuführungsstrecken und Wegführungsstrecken erlaubt eine Sortierfunktion der erfindungsgemässen Pufferspeichereinrichtung 110, indem die zugeführten Transporteinheiten am gewünschten Ort in den kontinuierlichen Warenstrom eingefügt werden können.

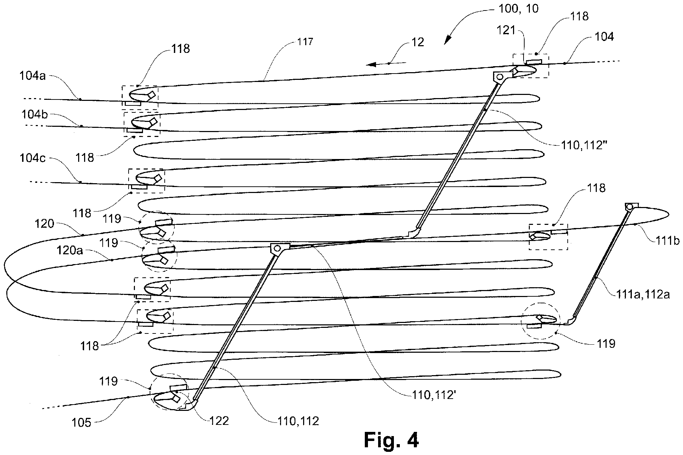

Eine Variante einer solchen erfindungsgemässen Pufferspeichereinrichtung 110 ist in Figur 4 gezeigt. In dieser Figur sind Zusammenführungen 118 von Förderpfaden mit gestrichelten Rechtecken markiert. Verzweigungen 119 von Förderpfaden sind mit gestrichelten Kreisen markiert. Die Pufferspeichereinrichtung 110 verfügt nur über eine Wegführstrecke 105.

An zwei Schleifenendpunkten der Pufferstrecke 117 zweigen zwei als Fallstrecke 120, 120a realisierte Kurschlussstrecken von der Pufferstrecke 117 ab, und münden jeweils zwei Windungen der Pufferstrecke 117 tiefer wieder in die Pufferstrecke 117 ein.

Eine weitere Kurzschlussstrecke zweigt an einer Schleife der Pufferstrecke 117 ab, und überwindet auf einer ersten Steigstrecke 111a mittels einer Steigfördervorrichtung einen gewissen Höhenunterschied, bevor sie in einen abfallenden Streckenabschnitt 111b übergeht, und schliesslich drei Schleifen oberhalb des Startpunktes wieder in die Pufferstrecke 117 einmündet.

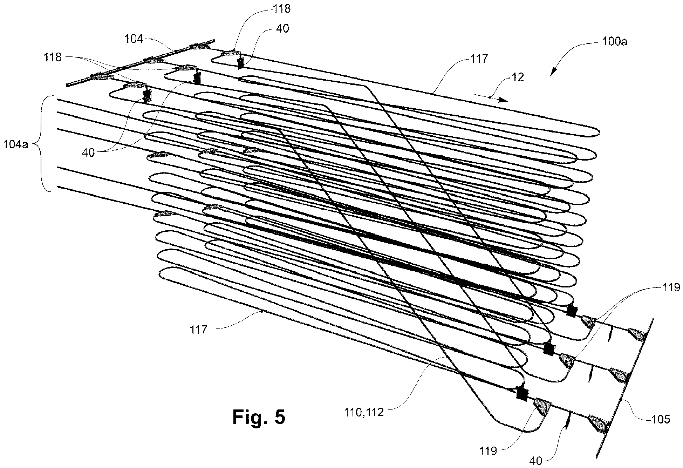

Ein Beispiel eines erfindungsgemässen Pufferspeichersystems 100a ist in Figur 5 gezeigt. Drei Pufferspeichereinrichtungen ähnlich zu denjenigen aus den Figuren 3, 4 sind nebeneinander angeordnet. Über eine gemeinsame Zuführungsstrecke 104 gelangen Transporteinheiten 40, im gezeigten Beispiel Transporttaschen, auf die Pufferstrecken 117 der drei parallel geschalteten Pufferspeichereinrichtungen des Pufferspeichersystems. Am Endpunkt der Pufferstrecken verlassen die Transporteinheiten 40 das Pufferspeichersystem 100a auf einer gemeinsamen Wegführungsstrecke 105. An verschiedenen Stellen der drei Pufferspeichereinrichtungen münden eine Mehrzahl von weiteren Zuführungsstrecken 104a in die Pufferstrecken ein.

Ein solches Pufferspeichersystem weist eine sehr hohe Speicherkapazität pro Volumen auf, und einen sehr geringen Grundflächenverbrauch. Die Grundfläche kann sogar anderweitig genutzt werden, da das Pufferspeichersystem keine Anlagenteile auf dem Boden benötigt und über Kopf betrieben werden kann.

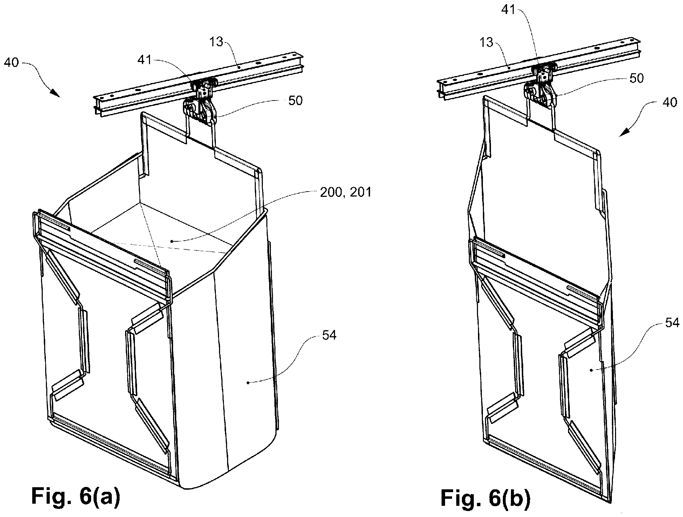

Ein Beispiel einer Transporteinheit 40, wie sie in einer erfindungsgemässen Pufferspeichereinrichtung beziehungsweise in einem erfindungsgemässen Pufferspeichersystem verwendet werden kann, ist in Figur 6 offenbart. Auf einer Laufschiene 13 eines Hängefördersystems läuft ein Laufwagen 41 der Transporteinheit 40. Abgewandt von der Laufschiene 13 ist eine Kopplungsvorrichtung 50 an dem Laufwagen 41 angebracht, an welchem wiederum eine Transporttasche 54 schwenkbar hängend gelagert ist. Die Transporttasche 54 ist so konstruiert, dass sie sich im leeren Zustand aufgrund ihres Eigengewichts entlang vorgesehener Scharnierelemente selbsttätig zusammenklappt, so dass die Transporteinheiten im leeren Zustand (vgl. Figur 6(b)) platzsparend gestaut beziehungsweise bereitgehalten werden können. Im beladenen Zustand (vgl. Figur 6(a)) befindet sich das Transportgut 200 in Form einer Stückguteinheit, beispielsweise eines Pakets, innerhalb der nun aufgeklappten Transporttasche 54.

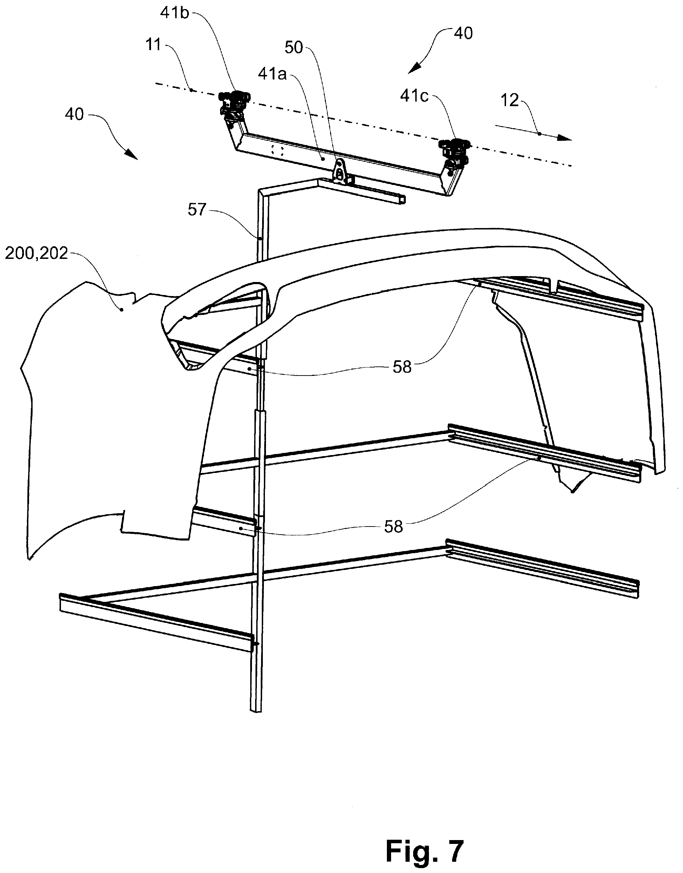

Ein anderes Beispiel einer Transporteinheit 40, die für grössere Transportgüter 200 wie beispielsweise Karosserieteile 202 geeignet ist, ist in Figur 7 dargestellt. Die Transporteinheit 40 weist zwei Laufwagenelemente 41b, 41c auf, welche über eine Strebe 41a miteinander verbunden sind, und so zusammen einen Laufwagen bilden. Dieser Laufwagen läuft auf einer Laufschiene (nicht dargestellt) entlang eines Förderpfades 11 in Laufrichtung 12. Über eine schwenkbar mit der Strebe 41a verbundene Kopplungsvorrichtung 50 ist ein Transportträger 57 hängend an dem Laufwagen gelagert. Der Transportträger 57 weist mehrere Trägerelemente 58 auf, auf welchen ein Karosserieteil 202 gelagert ist.

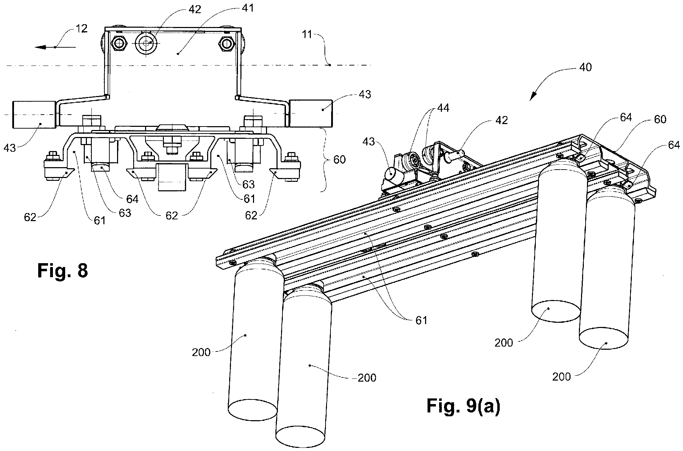

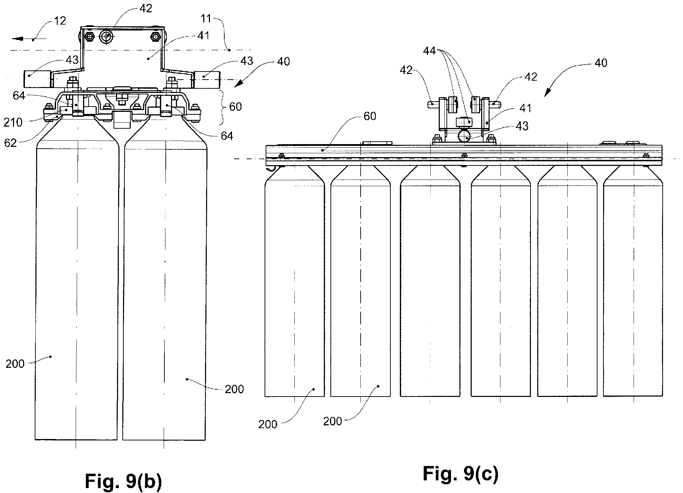

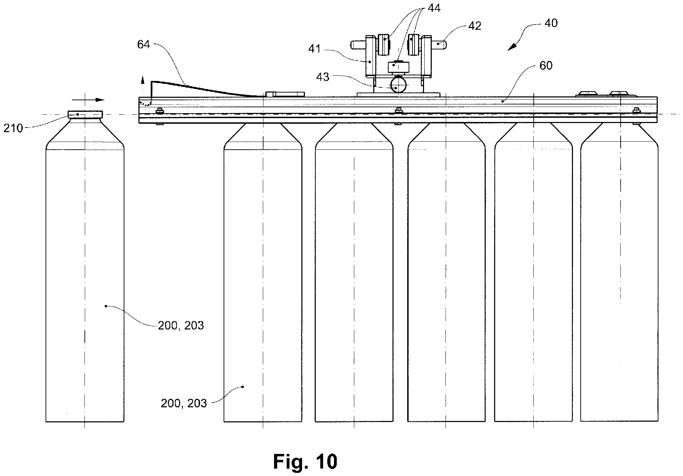

Eine besonders vorteilhafte Transporteinheit 40 ist in den Figuren 8, 9 und 10 offenbart. Die Transporteinheit 40 weist einen Laufwagen 41 ähnlich wie in Figur 6 auf, mit Rollen 44, die dazu vorgesehen sind, den Laufwagen in der Laufschiene (nicht dargestellt) rollend abzustützen und seitlich in der Spur zu halten. Ein Kopplungsbolzen 42 erlaubt die reversible Kopplung des Laufwagens 41 an ein Fördermittel (nicht dargestellt), beispielsweise einen Steigförderer, einen Umlaufförderer oder einen Schneckenförderer.

Unter dem Laufwagen ist eine Trägervorrichtung 60 angebracht, welche dazu geeignet ist, eine Mehrzahl von Flaschen (hier zwölf Flaschen) oder ähnlichen Behältern hängend zu lagern beziehungsweise zu transportieren

Der Laufwagen 41 weist in Laufrichtung 12 auf beiden Seiten einen Abstandshalter 43 auf, der bei verdichteter Speicherung beziehungsweise bei Auflaufen der Transporteinheit 40 auf eine Aufstauung von Transporteinheiten auf dem Förderpfad einen ausreichenden Abstand zur vorhergehenden bzw. nachfolgenden Transporteinheit sicherstellt, und so einen unerwünschten Kontakt der Trägervorrichtungen 60 beziehungsweise des Transportguts verhindert. Die Abstandshalter können auch als Stossdämpferelemente dienen, indem sie beispielsweise aus Elastomer gefertigt sind, und/oder ein Federelement aufweisen.

Unterhalb des Laufwagens 41 ist quer zur Laufrichtung 12 eine Trägervorrichtung 60 angeordnet, die im gezeigten Ausführungsbeispiel fix mit dem Laufwagen verbunden ist. Diese Orientierung der Trägervorrichtung in Bezug zum Laufwagen erlaubt eine verdichtete Anordnung der Transporteinheiten auf dem Förderpfad.

Möglich ist alternativ auch eine Verbindung mittels einer Kopplungsvorrichtung, die beispielsweise eine Drehung der Trägervorrichtung in Bezug auf den Laufwagen ermöglicht. Beispielsweise kann eine solche Kopplungsvorrichtung als Gelenkelement ausgestattet sein, die eine Schwenkbewegung um eine waagrechte Drehachse quer zur Förderrichtung ermöglicht. Die hängend an dem Gelenk gelagerte Trägervorrichtung bleibt so auch auf nicht horizontalen Abschnitten eines Förderpfades waagrecht ausgerichtet. Eine solche Transporteinheit ist entsprechend auch für die obenstehend beschriebenen Pufferspeichereinrichtungen geeignet.

Alternativ oder zusätzlich kann die Kopplungsvorrichtung auch eine Drehung der Trägervorrichtung um eine senkrechte Drehachse ermöglichen, was eine Änderung der Orientierung der Trägervorrichtung in Bezug auf die Laufrichtung erlaubt.

Die Trägervorrichtung 60 weist zwei parallele Trägerkanäle 61. Ein Trägerkanal 61 weist jeweils zwei Vorsprünge 62 auf.

Die zu transportierenden Transportgüter 200 sind im in den Figuren 8, 9 und 10 gezeigten Beispiel flaschenartige Behälter 203, welche im Bereich der Öffnung einen umlaufenden Kragen 210 aufweisen. Diese Auskragung 210 liegt bei einer beladenen Transporteinheit 40 auf den beiden Vorsprüngen 62 auf.

Im gezeigten Ausführungsbeispiel ist die Trägervorrichtung 60 als Hohlprofil ausgestaltet, welches beispielsweise kostengünstig aus Aluminium gefertigt werden kann. Für die Vorsprünge 62 sind separate Profilleisten vorgesehen, welche mit dem Hohlprofil verbunden sind, beispielsweise verschraubt, verklebt oder formschlüssig verbunden.

Die Vorsprungleisten 62 können beispielsweise aus HDPE, PP oder PTFE oder einem anderen Material mit geringer Gleitreibung gefertigt sein. Da lediglich die Vorsprungleisten im Betrieb mechanischer Abnutzung unterliegen, ist ein einfacher Austausch vorteilhaft.

Alternativ kann die Trägervorrichtung auch einteilig gefertigt sein, oder in noch weitere Teile aufgeteilt sein. Beispielsweise können die einzelnen Trägerkanäle einteilig gefertigt sein, beispielsweise aus faserverstärktem Kunststoffmaterial und mit einer gemeinsamen Trägerplatte verbunden sein, um so die Trägervorrichtung zu bilden.

Im gezeigten Ausführungsbespiel ist ein Ende des Trägerkanals 61 mit einem Anschlagelement 63 dauerhaft verschlossen, welches ein Herausfallen der Flaschen 203, 200 verhindert.

Die Beladung der Trägervorrichtung erfolgt über die entgegengesetzte Öffnung des Trägerkanals. Die Flaschen 203, 200 können beispielsweise gleitend in die Trägerkanäle eingebracht werden, wobei die Auskragung 210 auf den Vorsprüngen gleitet.

Um nach der Beladung der Transporteinheit ein Herausfallen der Transportgüter 200 zu verhindern, ist die Füllöffnung der Transportkanäle 61 mit einem Verschlusselement 64 reversibel verschlossen. Im gezeigten Beispiel ist das Verschlusselement als elastisches Federzungenelement 64 ausgestaltet, dessen Zunge den Trägerkanal 61 formschlüssig verschliesst. Zur Beladung wird die Federzunge angehoben, so dass die Füllöffnung freigegeben wird. Nach beendeter Beladung wird die Zunge freigegeben, und kehrt in ihre Verschlussposition zurück. Zur Entladung wird dieser Vorgang analog durchgeführt.

Alternativ können auch beide Seiten des Trägerkanals mit einem Verschlusselement reversibel verschlossen sein. Dies erlaubt beispielsweise die Beladung und Entladung der Transporteinheit von beiden Seiten.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Pufferspeichereinrichtung (100) für ein Hängefördersystem (10) mit einzeln förderbaren Transporteinheiten (40), mit einem geschlossenen Förderpfad umfassend eine Pufferstrecke (117), entlang welcher Transporteinheiten stromabwärts förderbar sind, eine Zuführstrecke (104) zur Zuförderung von Transporteinheiten an einem Zuführungspunkt (102) der Pufferstrecke, eine Wegführstrecke (105) zur Wegförderung von Transporteinheiten an einem Wegführungspunkt (103) der Pufferstrecke, und eine oder mehrere zusätzliche Kurzschlussstrecken (113), welche jeweils einen Startpunkt entlang der Pufferstrecke mit einem Zielpunkt entlang der Pufferstrecke verbinden.

2. Pufferspeichereinrichtung nach Anspruch 1, wobei eine Kurzschlusstrecke eine Rückführstrecke (110) ausbildet, welche mit der Pufferstrecke (117) einen geschlossenen Förderpfad bildet.

3. Pufferspeichereinrichtung nach Anspruch 2, wobei eine oder mehrere Kurzschlussstrecken (113) als Steigstrecke (111, 111a, 111b) ausgestaltet sind, welche den Startpunkt der Kurzschlussstrecke mit einem stromaufwärts zum genannten Startpunkt liegenden Zielpunkt der Kurzschlussstrecke verbindet.

4. Pufferspeichereinrichtung nach Anspruch 2 oder 3, wobei eine oder mehrere Kurzschlussstrecken (113) als Fallstrecke (120, 120a) ausgestaltet sind, welche den Startpunkt der Kurzschlussstrecke mit einem stromabwärts zum genannten Startpunkt liegenden Zielpunkt der Kurzschlussstrecke verbindet.

5. Pufferspeichereinrichtung nach einem der vorangegangenen Ansprüche, wobei die Pufferspeichereinrichtung (100) zwei oder mehr Zuführstrecken (104, 104', 104", 104a-104d) zur Zuförderung von Transporteinheiten aufweist.

6. Pufferspeichereinrichtung nach Anspruch 5, wobei die zwei oder mehr Zuführstrecken (104, 104', 104", 104a-104d) an zwei oder mehr Zuführungspunkten (102, 102a-102d) in die Pufferstrecke (117) münden.

7. Pufferspeichereinrichtung nach einem der vorangegangenen Ansprüche, wobei die Pufferspeichereinrichtung (100) zwei oder mehr Wegführstrecken (105, 105', 105", 105a) zur Wegförderung von Transporteinheiten aufweist.

8. Pufferspeichereinrichtung nach Anspruch 7, wobei die zwei oder mehr Wegführstrecken (105, 105', 105", 105a) an zwei oder mehr Wegführungspunkten (103, 103a) von der Pufferstrecke (117) abzweigen.

9. Pufferspeichereinrichtung nach einem der vorangegangenen Ansprüche, wobei die gesamte Pufferstrecke (117) oder ein Teil der Pufferstrecke ein Gefälle aufweist.

10. Pufferspeichereinrichtung nach einem der vorangegangenen Ansprüche, wobei entlang der gesamten Pufferstrecke (117) oder eines Teils der Pufferstrecke die Transporteinheiten (40) durch die Schwerkraft förderbar sind.

11. Pufferspeichereinrichtung nach einem der vorangegangenen Ansprüche, wobei auf der gesamten Pufferstrecke (117) oder einem Teil der Pufferstrecke die Transporteinheiten (40) angetrieben förderbar sind, beispielsweise durch einen Schleppkreisförderer oder einen Umlaufförderer.

12. Pufferspeichereinrichtung nach einem der vorangegangenen Ansprüche, wobei die gesamte Pufferstrecke (117) oder ein Teil der Pufferstrecke die Form eines abwärts führenden Förderpfades aufweist.

13. Pufferspeichereinrichtung nach einem der vorangegangenen Ansprüche, wobei entlang der Pufferstrecke (117) ein oder mehrere Staupunkte (106, 106a-106g) vorgesehen sind, an welchen Transporteinheiten (40) gezielt gestaut und wieder freigegeben werden können.

14. Pufferspeichereinrichtung nach einem der vorangegangenen Ansprüche, wobei entlang des Förderpfads der Pufferspeichereinrichtung (100) eine Speicherringvorrichtung (130) vorgesehen ist, welche Transporteinheiten (40) an einem Übergabepunkt aus der Pufferspeichereinrichtung übernehmen und einspeichern und wieder ausspeichern und an dem Übergabepunkt an die Pufferspeichereinrichtung übergeben kann.

15. Pufferspeichereinrichtung nach einem der vorangegangenen Ansprüche, wobei entlang des Förderpfads der Pufferspeichereinrichtung (100) eine Sortiervorrichtung vorgesehen ist, welche Transporteinheiten (40) aus der Pufferspeichereinrichtung übernehmen, sortieren, und wieder in geänderter Reihenfolge an die Pufferspeichereinrichtung übergeben kann.

16. Pufferspeichereinrichtung nach einem der vorangegangenen Ansprüche, wobei die Pufferspeichereinrichtung (100) ein Ortungssystem aufweist, mit welchem der Standort von Transporteinheiten (40) und/oder Transportgütern (200) innerhalb der Pufferspeichereinrichtung bestimmt werden kann, beispielsweise ein funkbasiertes Ortungssystem.

17. Pufferspeichereinrichtung nach einem der vorangegangenen Ansprüche, wobei die Pufferspeichereinrichtung (100) ein Überwachungssystem mit einer oder mehreren entlang des Förderpfads angeordneten Sensoreinheiten aufweist, mit welchen Daten von Datenträgerelementen passierender Transporteinheiten (40) und/oder Transportgüter (200) empfangen werden können.

18. Pufferspeichersystem (100a) mit zwei oder mehr parallel geschalteten Pufferspeichereinrichtungen (100) nach einem der vorangegangenen Ansprüche.

19. Pufferspeichersystem (100a) nach Anspruch 18, wobei zwischen zwei oder mehr parallel geschalteten Pufferspeichereinrichtungen (100) Verbindungsstrecken vorgesehen sind, über welche Transporteinheiten (40) von einer Pufferspeichereinrichtung zur anderen Pufferspeichereinrichtung wechseln können.

20. Hängefördersystem (10) mit einer Pufferspeichereinrichtung (100) nach einem der Ansprüche 1 bis 17, oder einem Pufferspeichersystem (100a) nach einem der Ansprüche 18 oder 19.

21. Hängefördersystem nach Anspruch 20, mit einer der Pufferspeichereinrichtung (100) beziehungsweise dem Pufferspeichersystem (100a) stromabwärts nachgeschalteten Sortiervorrichtung.
